# FASCICULE DE BREVET EUROPEEN

(11) **EP 0 929 233 B1**
(45) Date de publication et mention de la délivrance du brevet: **04.12.2002**
(21) Numéro de dépôt: 96922195.1
(22) Date de dépôt: 19.07.1996
(51) Int. Cl.: A23K 1/16, A23K 1/18, A23L 1/236

(54) **SUCRANT EN POUDRE POUR ALIMENTATION ANIMALE**
ALS TIERFUTTER VERWENDBARER SÜSSSTOFF IN PULVERFORM
POWDERED SWEETENER COMPOSITION FOR ANIMAL FEED

(43) Date de publication de la demande: 21.07.1999
(73) Titulaire: Pancosma S.A. pour l'Industrie des Produits Biochimiques, 1218 Le Grand-Saconnex (CH)
(72) Inventeur: FELISAZ, Denis, F-74100 Annemasse (FR); DOAN, Kim, Son, CH-1226 Thônex (CH)
(74) Mandataire: Moinas, Michel
(86) Numéro de dépôt international: IB9600740
(87) Numéro de publication internationale: WO98003082

(56) Documents cités:
- EP-A- 0 681 789
- GB-A- 2 041 209
- GB-A- 2 185 674
- GB-A- 2 200 527
- US-A- 4 097 616

## Description

La présente invention se rapporte à un sucrant en poudre destiné à l'alimentation animale et trouve un intérêt tout particulièrement dans l'alimentation des jeunes animaux d'élevage, par exemple le porcelet, le veau et l'agneau.

Traditionnellement, les sucrants en poudre pour l'alimentation animale sont composés d'un mélange statistique de deux poudres de granulométries très différentes, à savoir une poudre d'un édulcorant d'une granulométrie relativement grossière et mélangée à un potentiateur se présentant sous forme d'une poudre beaucoup plus fine. L'édulcorant, c'est-à-dire l'agent qui apporte le goût sucré est habituellement de la saccharine ou du saccharinate de sodium ou de calcium , parfois d'autres édulcorants intenses d'origine naturelle ou artificielle.

Le rôle du potentiateur est double, D'abord, comme son nom l'indique, il a comme effet de prolonger la perception du goût sucré qui, en son absence, serait trop fugitive. Un bon potentiateur, tels que ceux utilisés classiquement, permet d'augmenter la perception sucrée dans le temps d'environ 50 à 80 %. L'autre effet du potentiateur, et non des moindres, est de masquer les goûts secondaires ou parasites de l'édulcorant, par exemple de masquer le goût amer et métallique de la saccharine ou de ses sels de sodium et de calcium.

Pour des raisons de commodité de l'exposé uniquement et de meilleure compréhension du problème posé, nous nous référerons plus particulièrement ici à l'alimentation du porcelet, bien que l'invention s'applique à d'autres jeunes animaux d'élevage tels que jeunes bovins, ovins, caprins, équidés, et cervidés.

Chez le porcelet, la consommation doit être optimale durant la période de sevrage, afin de faciliter la transition du lait maternel à l'aliment solide. Cette phase s'accompagne d'une vulnérabilité accrue de la santé du porcelet et, pour prévenir les risques d'affection, l'aliment est parfois supplémenté en produits médicamenteux, gustativement répulsifs. On cherchera alors à stimuler son appétit pour qu'il consomme le maximum d'aliment, en lui offrant des rations qui contiennent des sucrants, le jeune animal étant particulièrement friand de la saveur sucrée à laquelle il a été habitué avec le lait de sa mère. Pour fixer les idées, il faut savoir qu'un porcelet sevré de 28 jours, pesant de 6,5 à 8 kg, mange 200 à 300 g par jour d'une nourriture se présentant habituellement sous la forme de granulés. Par bouchée, le porcelet absorbe environ 8 g, soit une cinquantaine de granulés, ce qui est très peu. Mais déjà, à partir de l'âge de 8 jours, on donne l'aliment granulé au porcelet sous la mère pour l'habituer à son futur régime. Il n'en mange que 30 à 40 g par jour, ce qui ne représente qu'une dizaine de granulés par bouchée. Supplémentation médicamenteuse ou pas, on va lui stimuler l'appétit en lui proposant des aliments qui lui flattent le goût et c'est pourquoi l'habitude s'est prise d'utiliser des granulés dans lesquels ont été incorporés des sucrants. Ces granulés d'un poids de l'ordre de 0,15 g pour un diamètre moyen de 0,3 cm et une longueur de 1,5 cm, sont composée d'un sucrant à raison d'environ ¼ en poids dispersé sur un support, à raison d'environ ¾ en poids, qui peut être du dextrose, de la silice, des céréales broyées ou leurs combinaisons. La proportion de saccharine par rapport au potentiateur est de l'ordre de 100 pour 1 à 2 et on ajoute environ 400 g/t de ce mélange dans l'aliment final.

Afin de lever toute ambiguïté dans la terminologie utilisée ci-après, nous utiliserons le terme de "sucrant" pour désigner le mélange édulcorant/potentiateur, objet de l'invention, ainsi que les produits traditionnels correspondants qui serviront de comparaison, tandis que nous utiliserons l'expression "formulation sucrante" ou "prémélange sucrant", lorsque le sucrant proprement dit est dispersé dans un support Cette formulation sucrante, en quelque sorte un condiment comme le sel ou le poivre l'est à l'alimentation humaine, sera ensuite incorporé dans l'aliment final proposé au porcelet.

Les sucrants traditionnels sont des mélanges statistiques d'un ou plusieurs édulcorants et d'un ou plusieurs potentiateurs dont, comme déjà indiqué plus haut, les granulométries sont très différentes, Malgré le soin que l'on peut apporter à leur réalisation, il ne peut en résulter que des mélanges présentant une forte hétérogénéité. Pour cette raison, nous les qualifierons par la suite de "sucrants grossiers".

Cette très forte inhomogénéité, conjuguée à l'absorption par le porcelet d'un nombre très réduit de granulés par bouchée, conduit à ce que l'effet ressenti par le jeune animal peut être très différent d'une bouchée à l'autre (et entraîner des variations dans la consommation), une bouchée pouvant présenter un goût sucré à peine perceptible, tandis que la bouchée suivante peut être, elle, trop sucrée voire amère et métallique par suite des difficultés à masquer l'arrière-goût de la saccharine, en dépit de la présence du potentiateur, lorsque celle-ci est en trop forte concentration. Les formulations sucrantes traditionnelles, à base de sucrants grossiers, bien qu'elles soient couramment utilisées en élevage à défaut de mieux, ne donnent donc que modérément satisfaction.

Un agent sucrant en poudre pour alimentation animale, est décrit dans GB 2 185 674. Cet agent contient un édulcorant et un potentiateur dans le but de préparer une eau de boisson. On connaît également un agent sucrant tel que décrit dans EP 0 681 789 contenant comme édulcorant de la thaumatine, dont la granulométrie est indifférente (mélange à sec par exemple).

Aucun de ces deux documents n'aborde le problème technique posé par l'invention, à savoir celui d'une poudre à répartition édulcorante homogène.

D'une façon générale d'ailleurs, les questions liées à l'utilisation d'édulcorants en alimentation animale sont des sujets curieusement peu évoqués dans la littérature et on citera pour mémoire l'exposé DE-2 029 749 qui n'a aucun rapport avec l'objet de la présente invention, puisqu'il concerne un nutriment formé d'une couche de substance édulcorante et contenant du fer assimilable.

Les problèmes évoqués ci-dessus sont résolus par l'invention, de façon étonnamment simple, l'invention consistant à proposer un sucrant en poudre pour l'alimentation animale sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre.

Le sucrant en poudre selon l'invention a une granulométrie comprise entre 10 et 100 µm, avec une répartition gaussienne. De préférence aussi, la proportion édulcorant/potentiateur(s) est comprise entre 100/0,2 et 100/2, valeurs exprimées en parties pondérales.

Comme indiqué plus haut et comme on le verra plus loin, puisque la proportion de potentiateur par rapport à l'édulcorant est sensiblement constante et égale d'une particule à l'autre, elle se révélera constante d'un granulé à l'autre dans la formulation sucrante dans laquelle le sucrant aura été dispersé sur un support, et en final dans l'aliment servi à l'animal.

On comprendra aisément, dans ces conditions, que l'appétit du porcelet sera d'autant mieux stimulé qu'il aura le goût sucré constant qu'il recherche, constant en intensité et dans son profil, sans variation d'une bouchée à l'autre.

L'enjeu est évidemment de favoriser la rentabilité économique de l'élevage des jeunes animaux en permettant une prise de poids plus rapide et surtout plus régulière et comparable d'un animal à l'autre.

Le jeune animal, placé devant le sucrant en poudre selon l'invention, mangera de meilleur appétit, et donc plus ou plus efficacement, et prendra donc plus de poids dans un laps de temps donné qu'un jeune animal placé devant une formulation comprenant un sucrant grossier, à composition identique. Il en résultera moins de gaspillage et, comme on le verra plus loin, lui permettra d'utiliser moins de sucrant dans les granulés, le sucrant en poudre se présentant généralement sous la forme d'une poudre plus fine que le sucrant grossier traditionnel.

En effet, et c'est là une des formes d'exécution préférée selon l'invention, le sucrant selon l'invention peut se présenter sous le forme d'une poudre ayant une répartition gaussienne et un diamètre moyen de particules compris entre 10 et 100 µm, comprenant entre 65'000'000 et 85'000'000, par exemple autour de 75'000'000, de particules par gramme, à comparer avec une saccharine de 40-80 Mesh ayant une granulométrie comprise entre 100 et 1000 µm et ne comprenant que de 50'000 à 70'000, en moyenne 60'000 particules environ au gramme.

L'économie sera donc réalisée à la fois sur une meilleure régularité de l'alimentation du jeune animal et sur le fait que selon l'invention le goût sucré recherché peut être apporté aux granulés et à l'aliment final en utilisant moins de sucrant.

Comme édulcorants, on peut utiliser, seuls ou en mélanges, le saccharinate de sodium ou de calcium et la saccharine déjà cités, ainsi que d'autres édulcorants tels que l'aspartyl-phénylalanine, l'acésulfame et les cyclamates et le stévioside qui est un glycoside d'origine naturelle.

Comme potentiateur on peut utiliser dans l'alimentation du porcelet la thaumatine, qui est une protéine d'origine végétale, des glycosides tels que la néohespéridine dihydrochalcone (NHDC), la glycyrrhizine, etc., seuls ou en mélanges. Ces substances assurent une très grande rémanence au goût sucré et couvrent bien l'arrière-goût amer et métallique de la saccharine et de ses sels.

Le sucrant en poudre selon l'invention peut contenir également d'autres ingrédients en petites quantités, tels que des exhausteurs de goût, glutamate de sodium, nucléotides (inosinate et guanylate de sodium), maltol et éthylmaltol, etc. des arômes. Ces ingrédients font partie des "micro-ingrédients" qui peuvent entrer dans la formulation intermédiaire de l'aliment ou prémix qui peut contenir aussi des vitamines, des oligo-éléments, voire des substances médicamenteuses dispensés à titre préventif ou prophylactique. Ces dernières substances sont généralement calculées pour être présentes à raison de 5 à 10 kg par tonne dans l'aliment final.

Le sucrant en poudre selon l'invention peut être préparé très simplement, selon une technologie bien connue en alimentation humaine et dans la technologie de fabrication des arômes, par "micronisation", c'est-à-dire par atomisation et séchage d'un mélange liquide, pulvérisé dans un appareil approprié. Cet appareil peut prendre la forme d'une tour dans laquelle le mélange liquide est admis au sommet par une buse ou une turbine, la poudre atomisée obtenue étant récoltée à la base de la tour. Dans certains cas, si cela s'avère nécessaire, la tour peut être remplie d'un gaz inerte pour éviter les phénomènes d'oxydation.

Le sucrant en poudre selon l'invention peut être utilisé de deux façons dans l'alimentation des jeunes animaux d'élevage. D'abord, d'une façon classique, le sucrant selon l'invention peut être dispersé sur un support du type dextrose, silice ou céréales broyées par exemple à raison de 10 à 75 parties pondérales de sucrant pour 90 à 25 parties pondérales de support. Sur la base des valeurs usuelles, cela va permettre de constituer un aliment final à une dose moyenne de 200 à 600 g/t, de préférence 400 g/t, ce qui correspond à une quantité d'édulcorant de l'ordre de 100 à 150 g/t et de potentiateur de 1,2 à 1,8 g/t sur la base de la dose moyenne de 400 g/t. Il faut bien comprendre que, puisque le sucrant selon l'invention est parfaitement homogène et que la granulométrie de ce sucrant est suffisamment fine, il n'y aura évidemment aucune difficulté à obtenir une formulation sucrante sur support, puis un aliment final, eux aussi parfaitement homogène.

Une autre possibilité d'utiliser le sucrant selon l'invention est de le dissoudre dans l'eau de boisson destinée au jeune animal, notamment à raison de 2 à 3 g/l, ce sucrant en poudre étant soluble dans l'eau sans difficulté aucune.

L'invention sera mieux comprise en référence aux exemples ci-après. Ces exemples seront suivis d'exemples comparatifs destinés à mieux mettre en évidence les avantages de l'invention qui sont :
- un pouvoir sucrant régulier,
- la possibilité d'additionner des adjuvants en quantité elle aussi régulière
- une excellente stabilité à la conservation, meilleure que celle des sucrants grossiers dont les deux poudres constitutives, de granulométries très différentes, ont au fil du temps tendance à la ségrégation ou à la sédimentation.

### EXEMPLES 1 A 7

On prépare une solution A d'un ou plusieurs édulcorants en introduisant 900 litres d'eau dans une cuve, puis en chauffant jusqu'à 60°C On ajoute ensuite lentement 1000 kg de ou des édulcorants, on agite la solution pendant 30 minutes jusqu'à la dissolution complète (la solution devient transparente ).

Parallèlement, dans une petite cuve remplie de 100 litre d'eau chauffée jusqu'à 70°C, on ajoute lentement le ou les potentiateurs, en quantité correspondant à la proportion édulcorant/potentiateur désirée pour le sucrant en préparation, puis on laisser dissoudre le produit pendant 30 minutes.

On verse la solution de potentiateur(s) lentement dans la solution d'édulcorant(s)

Lorsque la solution devient transparente, on procède à l'opération d'atomisation-séchage (spray drying) dans une tour dont le conditions de travail sont les suivantes :

| | |
|---|---|
| Température de la solution | 60°C |
| Température d'air entrée | 190°C |
| Température d'air sortie | 100°C |
| Vitesse de rotation de la turbine d'atomisation | 15'000 t/min. à 20'000 t/min. |

On obtient ainsi un sucrant selon l'invention, se présentant sous forme d'une poudre fine homogène ayant une granulométrie à répartition gaussienne comprise entre 10 et 100 µm avec une moyenne de 48,5 µm et comprenant autour de 75'000'000 particules ou grains par gramme. Cette poudre est soluble dans l'eau.

On a ainsi réalisé les sucrants en poudre suivants, selon les édulcorants et les potentiateurs utilisés, et selon leur proportion exprimée en valeurs pondérales ;

| Exemples | Edulcorants | Potentiateurs | Proportions |
|---|---|---|---|
| **1** | Saccharinate de sodium | Thaumatine | 25/0,05 |
| | | | |
| **2** | Saccharinate se calcium | NHDC | 25/0,3 |
| | | | |
| **3** | Saccharinate de sodium | Glycyrrhizine | 25/0,1 |
| | | | |
| **4** | Acésulfame | NHDC | 2510,33 |
| | | | |
| **5** | Saccharinate de sodium/ Acésulfame | NHDC | 16/8/0,33 |
| | | | |
| **6** | Saccharinate de sodium | Glycyrrhizine NHDC | 25/0,1/0,1 |
| | | | |
| **7** | Saccharinate de sodium | Glycyrrhizine Stévioside | 25/0,1/2 |
| **8** | Saccharinate de sodium | NHDC Thaumatine | 25/0,2/0,02 |
| | | | |
| **9** | Saccharinate de sodium | NHDC/Maltol | 25/0,33/0,2 |
| | | | |
| **10** | Saccharinate de sodium | NHDC/éthylmaltol | 25/0,33/0,1 |

La thaumatine utilisée dans les exemples 1 et 8 provient de la Société Hays Ingredients et est distribuée sous la marque Talin.

### EXEMPLES COMPARATIFS 1 A 4

### 1

On mesure par granulométrie laser un échantillon de sucrant grossier 40/80 Mesh (référence) et on le compare à un sucrant selon l'invention, qui a été obtenu par le procédé de "micronisation" décrit ci-dessus.

A masses volumiques pratiquement égales, soit 1,5692 g/cm³ pour l'échantillon de référence et 1,5270 g/cm³ pour l'échantillon de l'invention selon l'exemple 1, on constate que ce dernier contient 75'563'288 particules par gramme contre 58'270 particules par gramme pour la référence.

### 2

On compare le sucrant grossier 40/80 Mesh de l'exemple comparatif ci-dessus au sucrant micronisé de l'exemple 1 en préparant tout d'abord avec ces deux sucrant des aliments granulés, identiques par ailleurs, Puis on prélève au hasard dans chacun d'eux le même nombre de granulés, qu'on analyse individuellement par chromatographie en phase liquide à haute performance, en recherchant le pic du saccharinate de sodium après l'avoir extrait par centrifugation dans l'eau avec un taux de dilution de 0,1 g pour 500 µl.

Les résultats, reportés sur le tableau ci-après, sont relatif aux aires des pics de saccharinate, et représentent leur concentrations. Ils montrent clairement la grande disparité dans la présence du saccharinate dans l'échantillon de référence, certains échantillons ne comprenant même pas de saccharinate du tout.

Ils montrent aussi et surtout la grande homogénéité dans la répartition du saccharinate chez le sucrant de l'exemple 1

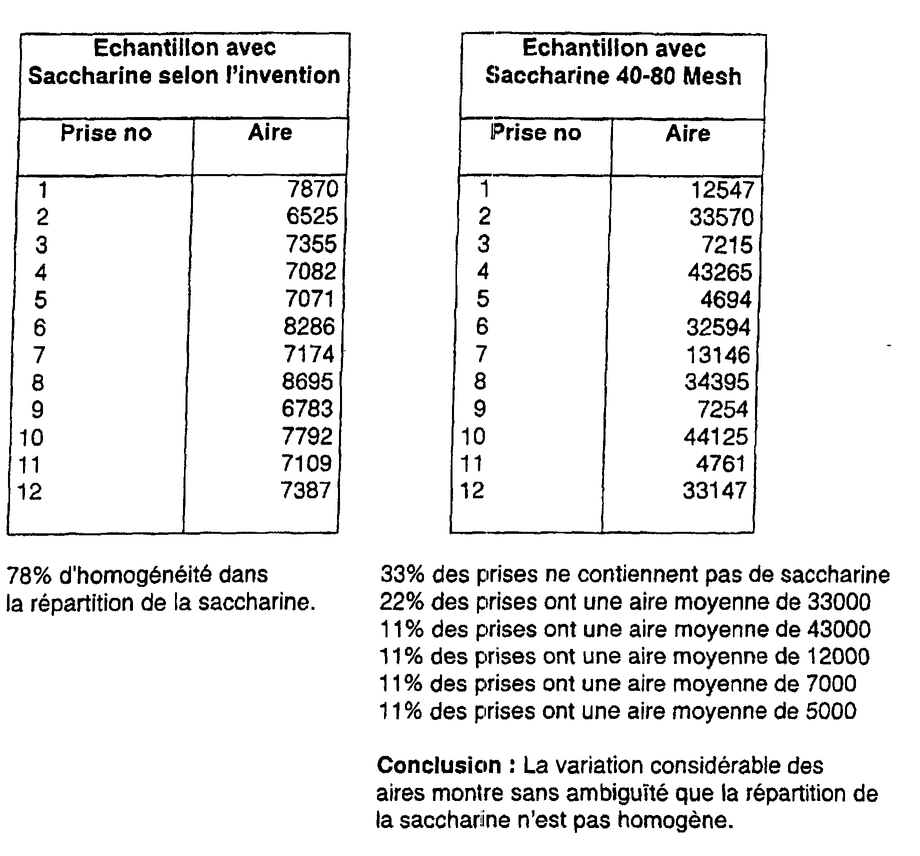

### 3

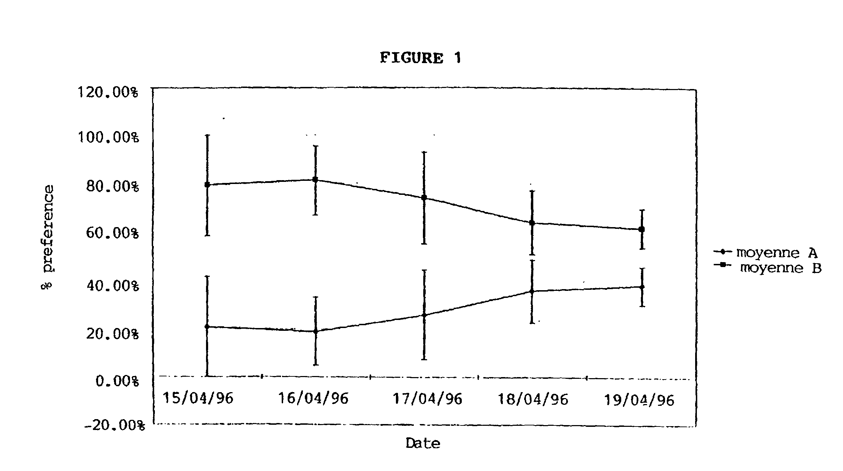

On compare le sucrant grossier de référence au sucrant selon l'invention de l'exemple 1 à l'aide de deux lots de porcelets sous la mère en processus de sevrage, sur 5 jours entre le 19ème et 23ème jour. Les porcelets se voient offrir un aliment de marque Palatone, distribué par la Société Pancosma en ce qui concerne les porcelets de référence. Les autres se voient offrir du Palatone en tous points identique, mais contenant le sucrant selon l'invention au lieu du sucrant grossier normal. La figure n°1 ci-après représente l'évolution de la consommation moyenne des porcelets en g/j sur les 5 jours. La courbe inférieure concerne la référence grossière et la courbe supérieure est relatif au sucrant de l'invention.

On constate immédiatement que les porcelets ayant à disposition l'aliment contenant le sucrant selon l'invention absorbe plus de nourriture que les porcelets ayant à disposition l'aliment contenant le sucrant grossier, donc prennent plus de poids.

### 4

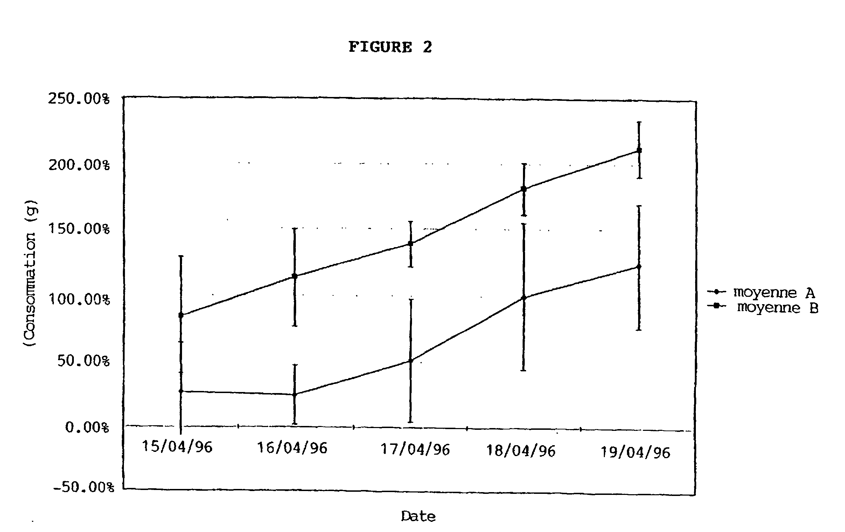

En utilisant le Palatone commercial de l'exemple comparatif précédent (sucrant grossier) et le Palatone reconstitué avec le sucrant selon l'invention, on compare ce dernier au sucrant grossier selon un test de libre choix portant sur des porcelets sous la mère en processus de sevrage, sur 5 jours entre le 19ème et 22ème jour. La figure n°2 ci-après représente l'évolution des préférences des porcelets sur les 5 jours. La courbe inférieure concerne la référence et la courbe supérieure est relatif au sucrant de l'invention.

On constate immédiatement la préférence à 80% des porcelets pour l'aliment contenant le sucrant selon l'invention, préférence qui s'atténue au cours des jours, mais reste marquée et se stabilise à 60% contre 40% seulement pour l'aliment à sucrant grossier.

## Revendications

1. Sucrant en poudre pour alimentation animale, **caractérisé en ce qu'**il se présente sous forme d'un mélange intime dont la répartition édulcorant/potentiateur est sensiblement homogène, non statistique, la proportion de l'édufcorant par rapport au potentiateur étant sensiblement constante et égale d'une particule de poudre à l'autre, et **en ce qu'**il a une granulométrie comprise entre 10 et 100 µm, avec une répartition gaussienne.

2. Sucrant selon la revendication 1, **caractérisé en ce que** la proportion édulcorant/potentiateur(s) est comprise entre 100/0,2 et 100/2, valeurs exprimées en parties pondérales.

3. Sucrant selon la revendication 1 ou 2, **caractérisé en ce que** l'édulcorant est choisi dans le groupe comprenant les saccharinates de sodium ou de calcium, la saccharine, l'aspartyl-phénylalanine, l'acésuifame, les cyclamates et le stévioside, et leurs mélanges.

4. Sucrant selon la revendication 1 ou 2, **caractérisé en ce que** le potentiateur est choisi dans le groupe comprenant la thaumatine, la néohespéridine dihydrochalcone (NHDC), la glycyrrhizine, et leurs mélanges.

5. Sucrant selon la revendication 1 ou 2, **caractérisé en ce qu'**il comprend également d'autres ingrédients choisi dans le groupe comprenant les exhausteurs de goût et les arômes,.

6. Procédé de préparation du sucrant selon l'une des revendications précédentes, **caractérisé en ce qu'**on prépare un mélange en solution d'un édulcorant et d'un potentiateur, puis qu'on pulvérise ce mélange par atomisation séchage pour obtenir une poudre.

7. Formulation alimentaire sucrante en granulés, **caractérisé en ce qu'**elle comprend un sucrant selon l'une des revendications 1 à 5 dispersé sur un support du type dextrose, silice ou céréales broyées à raison de 10 à 75 parties pondérales de sucrant pour 90 à 25 parties pondérales de support.

8. Utilisation de la formulation alimentaire sucrante selon la revendication 7 dans l'alimentation des jeunes animaux d'élevage.

9. Utilisation du sucrant en poudre selon l'une des revendications 1 à 5 dans l'élevage des jeunes animaux par dissolution de celui-ci dans l'eau de boisson, à raison de 2 à 3 g par I de boisson.

## Patentansprüche

1. Pulverförmiges Süssungsmittel für die Tierernährung, **dadurch gekennzeichnet, dass** es sich in Gestalt eines innigen Gemischs darbietet, dessen Süssstoff/Verstärker-Verteilung im Wesentlichen homogen und nicht statistisch ist, wobei der Anteil des Süssstoffs im Verhältnis zum Verstärker im Wesentlichen konstant und von einem Pulverteilchen zum nächsten gleichbleibend ist, und dadurch, dass es bei einer Gaussschen Verteilung Korngrössen zwischen 10 und 100 µm hat.

2. Süssungsmittel gemäss Anspruch 1, **dadurch gekennzeichnet, dass** das Süssstoff-Verstärker-Verhältnis zwischen 100 : 0,2 und 100 : 2 liegt, wobei die Werte in Gewichtsteilen ausgedrückt sind.

3. Süssungsmittel gemäss Anspruch 1 oder 2, **dadurch gekennzeichnet, dass** der Süssstoff aus der Gruppe ausgewählt ist, die die Saccharinate von Natrium oder Calcium, das Saccharin, das Aspartylphenylalanin, das Acesulfam, die Cyclamate und das Steviosid sowie ihre Mischungen umfasst.

4. Süssungsmittel gemäss Anspruch 1 oder 2, **dadurch gekennzeichnet, dass** der Verstärker aus der Gruppe ausgewählt ist, die das Thaumatin, das Neohesperidin-Dihydrochalcon (NHDC), das Glycyrrhizin und ihre Mischungen umfasst.

5. Süssungsmittel gemäss Anspruch 1 oder 2, **dadurch gekennzeichnet, dass** es noch weitere Inhaltsstoffe umfasst, die aus der Gruppe ausgewählt sind, die die Geschmacksverfeinerer und die Aromen umfasst.

6. Verfahren zur Herstellung des Süssungsmittels gemäss einem der vorangehenden Ansprüche, **dadurch gekennzeichnet, dass** man in Lösung ein Gemisch eines Süssstoffs und eines Verstärkers herstellt, dann diese Mischung durch Sprühtrocknung pulverisiert, um ein Pulver zu erhalten.

7. Süssende Nährstoffrezeptur in Granulatform, **dadurch gekennzeichnet, dass** sie ein Süssungsmittel gemäss einem der Ansprüche 1 bis 5 umfasst, das auf einem Träger vom Typ der Dextrose, Kieselerde oder gemahlener Getreide im Verhältnis von 10 bis 75 Gewichtsteilen des Süssungsmittels auf 90 bis 25 Gewichtsteile des Trägers verteilt ist.

8. Verwendung der süssenden Nährstoffrezeptur gemäss Anspruch 7 in der Ernährung junger Zuchttiere.

9. Verwendung des pulverförmigen Süssungsmittels gemäss einem der Ansprüche 1 bis 5 in der Aufzucht von Jungtieren durch dessen Auflösung im Trinkwasser in einem Verhältnis von 2 bis 3 g je Liter des Getränks.

## Claims

1. Powdered sweetener for animal feed, **characterized in that** it is provided in the form of an intimate mixture whose sweetener/potentiator distribution is substantially homogeneous, non-random, the proportion of sweetener relative to the potentiator being substantially constant and equal from one powder particle to another, and **in that** it has a particle size of between 10 and 100 µm, with a Gaussian distribution.

2. Sweetener according to Claim 1, **characterized in that** the sweetener/potentiator ratio is between 100/0.2 and 100/2, values expressed as parts by weight.

3. Sweetener according to Claim 1 or 2, **characterized in that** the sweetener is chosen from the group comprising sodium or calcium saccharinates, saccharin, aspartylphenylalanine, acesulfame, cyclamates and stevioside, and mixtures thereof.

4. Sweetener according to Claim 1 or 2, **characterized in that** the potentiator is chosen from the group comprising thaumatin, neohesperidin dihydrochalcone (NHDC), glycyrrhizin, and mixtures thereof.

5. Sweetener according to Claim 1 or 2, **characterized in that** it also comprises other ingredients chosen from the group comprising taste enhancers and flavourings.

6. Method for preparing the sweetener according to one of the preceding claims, **characterized in that** a mixture in solution of a sweetener and a potentiator is prepared, and this mixture is spray-dried in order to obtain a powder.

7. Sweetening food formulation in the form of granules, **characterized in that** it comprises a sweetener according to one of Claims 1 to 5 dispersed on a carrier such as dextrose, silica or ground cereals at the rate of 10 to 75 parts by weight of sweetener per 90 to 25 parts by weight of carrier.

8. Use of the sweetening food formulation according to Claim 7, in the feed for young farm animals.

9. Use of the powdered sweetener according to one of Claims 1 to 5, in the breeding of young animals by dissolving it in drinking water at the rate of 2 to 3 g per l of drink.
